# EUROPEAN PATENT APPLICATION

(11) **EP 4 310 814 A1**
(43) Date of publication of application: **24.01.2024**
(21) Application number: 21931713.8
(22) Date of filing: 01.12.2021
(51) Int. Cl.: G08G 1/16, G06T 7/00, H04N 5/225, H04N 5/232, H04N 7/18, B60R 1/20

(54) **WARNING DEVICE AND WARNING METHOD**

(30) Priority: 19.03.2021 JP 2021045681
(71) Applicant: JVCKenwood Corporation, Yokohama-shi, Kanagawa 2210022 (JP)
(72) Inventor: SAKAI Yasutoshi, Yokohama-shi, Kanagawa 221-0022 (JP); HAYASHI Keita, Yokohama-shi, Kanagawa 221-0022 (JP); TANIYAMA Hirofumi, Yokohama-shi, Kanagawa 221-0022 (JP)
(74) Representative: Potter Clarkson
(86) International application number: PCT/JP2021/044063
(87) International publication number: WO 2022/195970

(57) **Abstract**

In related art, there has been a problem that it is difficult to enable a driver of a vehicle to appropriately perceive a detected pedestrian or the like. A warning apparatus (1) includes a first image acquisition unit (21) configured to acquire a first image photographed by a far-infrared camera (11) which performs photographing in an advancing direction of a vehicle, a second image acquisition unit (22) configured to acquire a second image photographed by a visible light camera (12) which performs photographing in a direction agreeing with a direction of the far-infrared camera (11), a detection unit (23) configured to detect an object as a warning target from the first image acquired by the first image acquisition unit, a range specification unit (24) configured to specify a first object range in the first image and to specify a second object range, which corresponds to the first object range and indicates the detected object in the second image, in a case where the detection unit (23) detects the object as the warning target, and a display control unit (25) configured to cause a display unit (14), by which the driver of the vehicle is capable of visual observation of the second image, to display the second image in which the second object range is drawn.

## Description

### Technical Field

The present invention relates to a warning apparatus and a warning method which detect, by using a far-infrared camera, a pedestrian or the like present in an advancing direction or the like of a vehicle and warn a driver of the vehicle, for example.

### Background Art

In recent years, for a safety check in an advancing direction of a vehicle, a far-infrared camera has been used for detecting a detection target object in a situation where a visible light camera has difficulty in detection. Patent Literature 1 discloses an example of a target object detection technique using such a far-infrared camera.

A recognition processing apparatus disclosed in Patent Literature 1 includes an image acquisition unit which acquires first photographing data in which a situation around an own vehicle is photographed by a far-infrared camera, an other-vehicle detection unit which detects another vehicle parked or stopped around the own vehicle, a heat detection unit which detects heat emission based on an action of the other vehicle from heat distribution of a region corresponding to the other vehicle in the first photographing data, and a person detection unit which detects a person by preferentially executing person recognition for a vicinity of the other vehicle when the heat emission is detected.

### Citation List

### Patent Literature

Patent Literature 1: Japanese Unexamined Patent Application Publication No. 2020-027380

### Summary of Invention

However, because a far-infrared camera detects distribution of heat emitted by a pedestrian or the like as an image, a driver of a vehicle might not be capable of confirming the pedestrian or the like detected by the far-infrared camera by visual observation to an outside of the vehicle. In such a situation, because the driver of the vehicle cannot confirm a position of the pedestrian by visual observation to the outside of the vehicle although the pedestrian or the like is detected by an infrared camera, time period for and frequency of visual observations of a displayed image are increased, and a safety check in an advancing direction by visual observation might be disturbed.

Accordingly, one aspect of the present embodiment provides a warning apparatus including: a first image acquisition unit configured to acquire a first image photographed by a far-infrared camera which performs photographing in an advancing direction of a vehicle; a second image acquisition unit configured to acquire a second image photographed by a visible light camera which performs photographing in a direction agreeing with a direction of the far-infrared camera; a detection unit configured to detect an object as a warning target for a driver of the vehicle from the first image acquired by the first image acquisition unit; a range specification unit configured to specify a first object range which is a range indicating the object detected in the first image and to specify a second object range in the second image, the second object range corresponding to the first object range, in a case where the detection unit detects the object as the warning target; and a display control unit configured to cause a display unit, by which the driver of the vehicle is capable of visual observation of the second image, to display the second image in which the second object range is drawn.

Further, another aspect of the present embodiment provides a warning method of causing a warning apparatus to execute: a first image acquisition step of acquiring a first image photographed by a far-infrared camera which performs photographing in an advancing direction of a vehicle; a second image acquisition step of acquiring a second image photographed by a visible light camera which performs photographing in a direction agreeing with a direction of the far-infrared camera; a detection step of detecting an object as a warning target for a driver of the vehicle from the acquired first image; a range specification step of specifying a first object range which is a range indicating the object detected in the first image and of specifying a second object range in the second image, the second object range corresponding to the first object range, in a case where the object as the warning target is detected; and a display step of causing a display unit, by which the driver of the vehicle is capable of visual observation of the second image, to display the second image in which the second object range is drawn.

In the present embodiment, a driver of a vehicle can be enabled to appropriately perceive a pedestrian or the like detected from an image of a far-infrared camera.

### Brief Description of Drawings

Fig. 1 is a block diagram of a warning apparatus according to a first embodiment;
Fig. 2 is a diagram for explaining a difference between a photographing range of a visible light camera and a photographing range of a far-infrared camera in the warning apparatus according to the first embodiment;
Fig. 3 is a diagram for explaining warning display in the warning apparatus according to the first embodiment;
Fig. 4 is a diagram for explaining an action of the warning apparatus according to the first embodiment;
Fig. 5 is a diagram for explaining another form of the action of the warning apparatus according to the first embodiment;
Fig. 6 is a block diagram of a warning apparatus according to a second embodiment; and
Fig. 7 is a diagram for explaining an action of the warning apparatus according to the second embodiment.

### Description of Embodiments

Embodiments of the present invention will hereinafter be described with reference to drawings. For clarification of descriptions, omission and simplification are appropriately made in the following descriptions and drawings. In the drawings, the same reference characters are given to the same elements, and repetitions of descriptions will be skipped as needed.

Further, each configuration of the function blocks to be described in the following may be configured with hardware, software, or both of those, may be configured with one piece of hardware or software, or may be configured with a plurality of pieces of hardware or software. Each function (each process) may be realized by an arithmetic unit (for example, a computer) which has a CPU, a memory, and so forth. For example, a program for performing a creation method in the embodiments may be stored in a storage apparatus, the program stored in the storage apparatus is executed by the CPU, and each of the functions may thereby be realized.

Those programs can be stored and supplied to a computer by using various types of non-transitory computer-readable media. The non-transitory computer-readable media include various types of tangible storage media. Examples of the non-transitory computer-readable media include magnetic recording media (for example, a hard disk drive), a CD-ROM (read-only memory), a CD-R, a CD-R/W, and semiconductor memories (for example, a mask ROM, a PROM (programmable ROM), an EPROM (erasable PROM), a flash ROM, and a RAM (random access memory)). Further, the program may be supplied to a computer by using various types of transitory computer-readable media. Examples of the transitory computer-readable media include an electric signal, an optical signal, and an electromagnetic wave. The transitory computer-readable media can supply the program to a computer via a wired communication path such as an electric wire or an optical fiber, or a wireless communication path.

### First Embodiment

In a case where a pedestrian or the like is detected from an image photographed by a far-infrared camera, a warning apparatus 1 according to a first embodiment displays, on a display screen, the image photographed by the far-infrared camera and a frame line or the like which indicates the detected pedestrian or the like and thereby warns a driver of a vehicle.

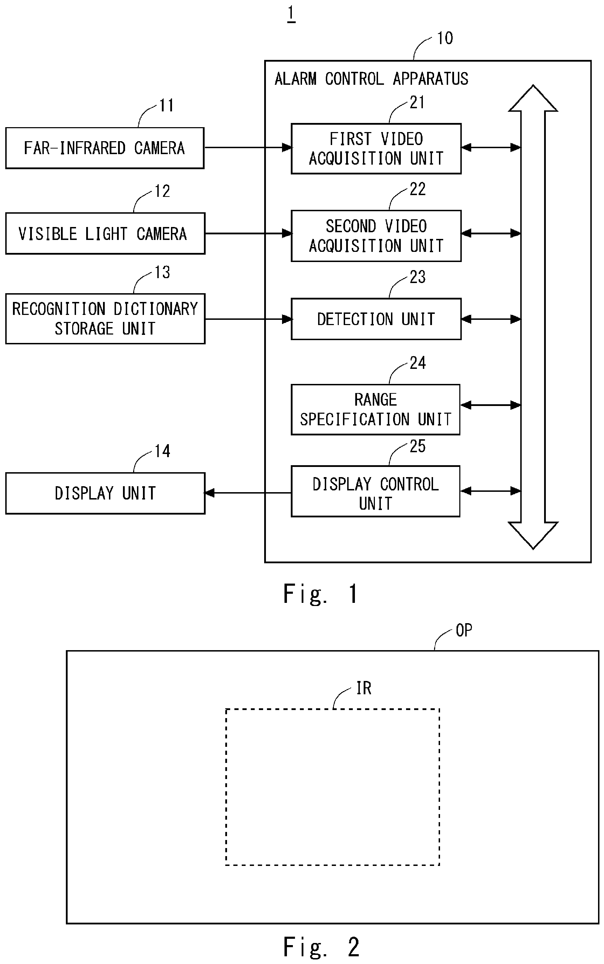

Fig. 1 illustrates a block diagram of the warning apparatus 1 according to the first embodiment. As illustrated in Fig. 1, the warning apparatus 1 according to the first embodiment has an alarm control apparatus 10, a far-infrared camera 11, a visible light camera 12, a recognition dictionary storage unit 13, and a display unit 14. The alarm control apparatus 10 is realized by an arithmetic apparatus such as a microcontroller unit (MCU) or a CPU which is capable of executing a program, for example. Further, the microcontroller unit may include a plurality of arithmetic units and may be capable of in parallel performing various processes in the program by the plurality of arithmetic units. Details of processing blocks realized in the alarm control apparatus 10 will be described later.

The far-infrared camera 11 is a camera which performs photographing for an area ahead of the vehicle, in other words, in a main advancing direction of the vehicle, receives far-infrared rays emitted from objects present in a photographing range, and outputs a so-called thermal image, an image which has light and shade corresponding to temperatures of physical bodies present in the photographing range. The visible light camera 12 is a camera which performs photographing in a direction agreeing with that of the far-infrared camera 11 and outputs an image in which the photographing range is photographed by visible light. Agreement between photographing directions of the far-infrared camera 11 and the visible light camera 12 means that both of the cameras photograph the area ahead of the vehicle. Further, because a photographing viewing angle of the far-infrared camera 11 is often narrower than a photographing viewing angle of the visible light camera 12, in such a case, a range of the photographing viewing angle of the far-infrared camera 11 is included in a range of the photographing viewing angle of the visible light camera 12.

The recognition dictionary storage unit 13 stores a recognition dictionary which results from machine learning of features such as shapes of objects as detection targets to be detected by a detection unit 23, which will be described later. The recognition dictionary storage unit 13 is configured with a non-volatile storage apparatus such as a flash memory, for example. The display unit 14 displays, to the driver of the vehicle, an image which is photographed by at least one of the far-infrared camera 11 and the visible light camera 12. The display unit 14 is possibly a display or the like which is installed in a dashboard of the vehicle, for example.

The alarm control apparatus 10 has a first image acquisition unit 21, a second image acquisition unit 22, the detection unit 23, a range specification unit 24, and a display control unit 25. Processing blocks in the alarm control apparatus 10 are processing blocks which are realized by programs or processing blocks which are implemented as dedicated hardware. Further, the first image acquisition unit 21, the second image acquisition unit 22, the detection unit 23, the range specification unit 24, and the display control unit 25 are configured to be capable of mutual cooperation of information by a process in the alarm control apparatus 10 or by a bus.

The first image acquisition unit 21 acquires a first image photographed by the far-infrared camera 11 which performs photographing in the advancing direction of the vehicle. The second image acquisition unit 22 acquires a second image photographed by the visible light camera 12. The detection unit 23 detects an object as a warning target for the driver of the vehicle from the first image acquired by the first image acquisition unit. Objects as warning targets for the driver of the vehicle are physical bodies detected based on differences in temperature distribution from an ambient temperature such as a person such as a pedestrian, a bicycle on which a person is riding, and an animal, for example. Further, as for the object as the warning target for the driver of the vehicle, among the above-described physical bodies, a physical body which is present in the area ahead as the advancing direction of the vehicle and is present in a position to which attention has to be paid in traveling of the vehicle may be set as the target.

In a case where the detection unit 23 detects the object as the warning target, the range specification unit 24 specifies a first object range which is a range indicating the detected object in the first image and specifies a second object range in the second image, the second object range corresponding to the first object range. The first object range specified by the range specification unit 24 is a range surrounding the detected object in the first image and is indicated by rectangular frame lines or the like, for example. The rectangular frame lines are frame lines which surround a whole external shape of the detected object and can indicate a position and a size on the display screen in addition to presence of the object on the display screen. In a case where the detected object is a person, for example, the first object range is indicated by rectangular frame lines at a vertical-to-horizontal ratio of 2:1, the rectangular frame lines surrounding the detected person. The second object range specified by the range specification unit 24 is a range indicating the same position in the second image as that in the first object range specified in the first image and is indicated by frame lines or the like in the same shape as the frame lines indicating the first object range, for example. The first object range and the second object range are not limited to the above-described forms, but various forms are applicable.

The display control unit 25 causes the display unit 14, by which the driver of the vehicle is capable of visual observation of the second image, to display the second image in which the frame lines or the like indicating the second object range are drawn. Further, when the second image is displayed, it is preferable that the display control unit 25 cause the display unit 14 to display the second image while drawing the second object range on the second image in which chroma or contrast is lowered. The chroma or contrast of the second image is lowered in such a manner, the frame lines or the like indicating the second object range thereby become conspicuous compared to display of the second image, and the driver of the vehicle can thus appropriately confirm a position of a second object.

Here, a description will be made about a difference in the photographing range between the far-infrared camera 11 and the visible light camera 12. Accordingly, Fig. 2 illustrates a diagram for explaining a difference between the photographing range of the visible light camera and the photographing range of the far-infrared camera in the warning apparatus 1 according to the first embodiment. As illustrated in Fig. 2, in the warning apparatus 1 according to the first embodiment, the photographing ranges of the far-infrared camera 11 and the visible light camera 12 are ranges in the advancing direction of the vehicle, and photographing is performed in the directions which agree with each other. Further, in the warning apparatus 1, a far-infrared camera photographing range IR to be photographed by the far-infrared camera 11 has a narrower range than a visible light camera photographing range OP to be photographed by the visible light camera 12. In the example illustrated in Fig. 2, a center of the visible light camera photographing range OP is set to agree with a center of the far-infrared camera photographing range IR. The visible light camera photographing range OP may be the photographing viewing angle of the visible light camera 12, and the far-infrared camera photographing range IR may be the photographing viewing angle of the far-infrared camera 11. Coordinates of the visible light camera photographing range OP are associated with coordinates of the far-infrared camera photographing range IR in a range in which the visible light camera photographing range OP agrees with the far-infrared camera photographing range IR. Thus, the second object range in the second image can be specified based on the first object range specified in the first image.

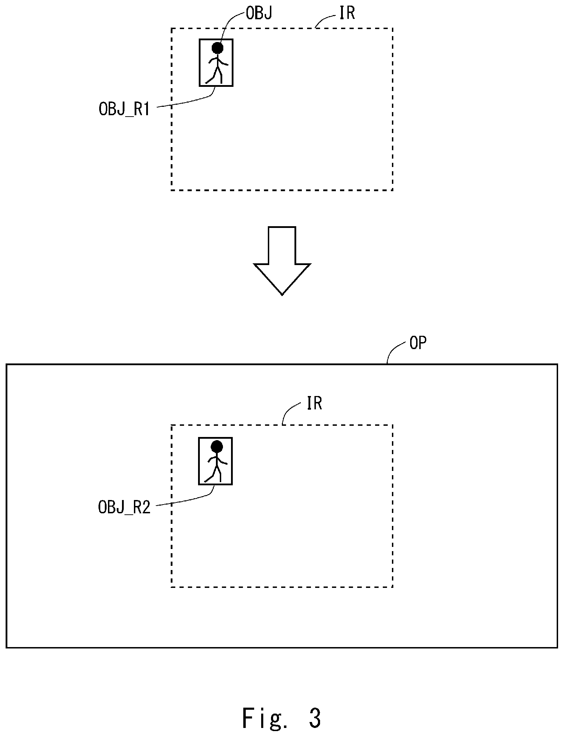

Next, a description will be made about an action of the warning apparatus 1 according to the first embodiment. Accordingly, Fig. 3 illustrates a diagram for explaining warning display in the warning apparatus 1 according to the first embodiment. As illustrated in Fig. 3, when an object OBJ as a detection target is detected in the far-infrared camera photographing range IR, the warning apparatus 1 according to the first embodiment specifies a first object range OBJ_R1 and specifies a second object range OBJ_R2 in the position corresponding to the first object range OBJ_R1 in the visible light camera photographing range OP. By performing display which explicitly indicates the second object range OBJ_R2 in the second image as an image of the visible light camera photographing range OP, the warning apparatus 1 warns the driver of the vehicle that the object OBJ is present.

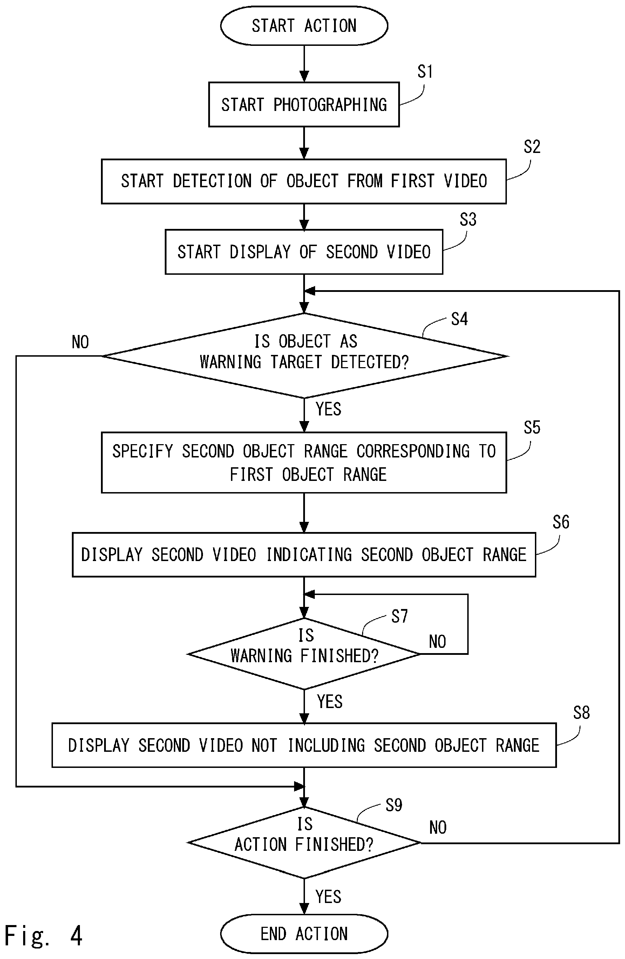

The above action will be described by using a flowchart. Fig. 4 illustrates a diagram for explaining the action of the warning apparatus 1 according to the first embodiment. As illustrated in Fig. 4, when the action is started, the warning apparatus 1 according to the first embodiment starts photographing by the far-infrared camera 11 and the visible light camera 12 (step S1). As for a start of an action in step S1, the action is started in a case where motive power such as an engine of the vehicle in which the warning apparatus 1 is installed is turned on, for example. Further, in a case where object detection by the far-infrared camera 11 is performed when illuminance around the vehicle is low such as at night or in a tunnel, for example, the object detection is started when the illuminance becomes low to the extent that the illuminance indicates a situation at night or in a tunnel. After the start of step S1 or at the same time as the start, the warning apparatus 1 starts, by the detection unit 23, detection of the object OBJ in the far-infrared camera photographing range IR from the first image which is acquired by the far-infrared camera 11 and the first image acquisition unit 21 (step S2). Further, the warning apparatus 1 starts, by the display control unit 25, display, on the display unit 14, of the second image (for example, an image of the visible light camera photographing range OP) which is acquired by the visible light camera 12 and the second image acquisition unit 22 (step S3). As the second image to be displayed on the display unit 14, a part in the visible light camera photographing range OP may be displayed, the part agreeing with the far-infrared camera photographing range IR.

In a case where the detection unit 23 detects presence of the object OBJ in the far-infrared camera photographing range IR (YES in step S4), the range specification unit 24 specifies the position of the second object range OBJ_R2 which corresponds to the first object range OBJ_R1 (step S5). The warning apparatus 1 displays, by the display control unit 25, the second image, which indicates the second object range OBJ_R2, on the display unit 14 (step S6). The second image indicating the second object range OBJ_R2 is continued until a warning finishing condition is satisfied, the warning finishing condition demanding that a state where warning is necessary is eliminated, for example, until presence of the object OBJ is removed from the far-infrared camera photographing range IR (step S7). After the warning finishing condition is satisfied, the display control unit 25 displays, on the display unit 14, the second image which does not include the second object range OBJ_R2 (step S8).

The warning apparatus 1 according to the first embodiment repeats processes in steps S4 to S8 until a state where the action is finished is established such as a state where the engine is stopped. Note that in a case where the object OBJ is not detected in the far-infrared camera photographing range IR in step S4, the warning apparatus 1 according to the first embodiment does not execute steps S5 to S8 until the object OBJ is detected in the far-infrared camera photographing range IR but continues a detection process of the object OBJ (NO in step S4 and NO in step S9).

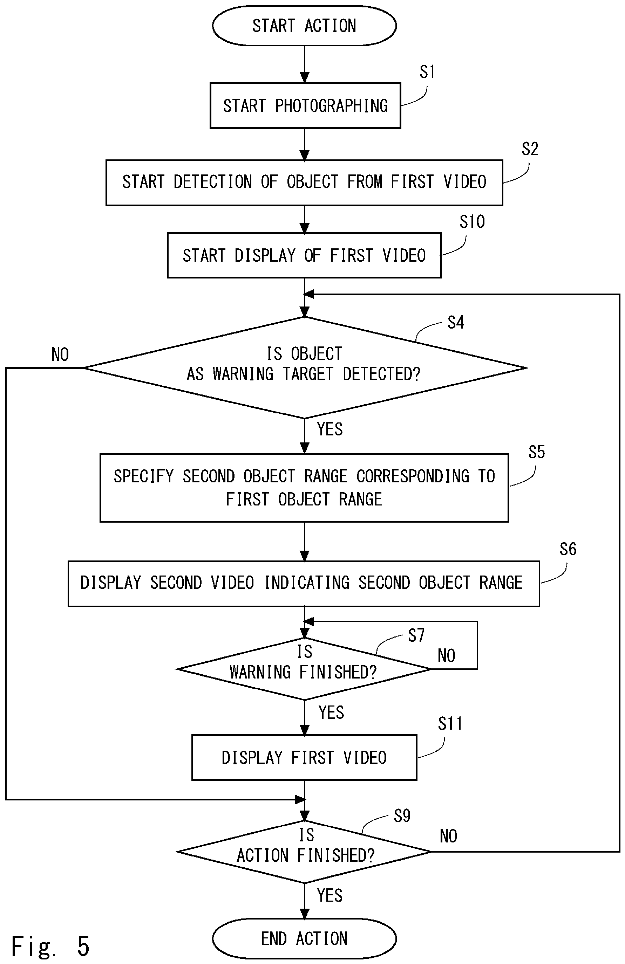

Note that another form is possible for the action of the warning apparatus 1 according to the first embodiment. Accordingly, Fig. 5 illustrates a diagram for explaining another form of the action of the warning apparatus 1 according to the first embodiment. As illustrated in Fig. 5, in the other form of the action of the warning apparatus 1 according to the first embodiment, in the flowchart illustrated in Fig. 4, steps S3 and S8 of displaying the second image are changed to steps S10 and S11 of displaying the first image. In other words, in the other form of the action of the warning apparatus 1 according to the first embodiment, the first image is displayed on the display unit 14 in a state where the object OBJ is undetected. In such a manner, in the warning apparatus 1 according to the first embodiment, in a period in which the object OBJ is undetected, whether the first image is displayed or the second image is displayed on the display unit 14 can be selected in accordance with specifications.

As described above, when the object OBJ as the warning target is detected in the far-infrared camera photographing range IR, the warning apparatus 1 according to the first embodiment displays the second object range OBJ_R2 which indicates a presence position of the object OBJ while superimposing the second object range OBJ_R2 on the second image and thereby presents a warning to be informed to the driver intelligibly for the driver. Even in a case where the object as the warning target cannot be confirmed by visual observation to the outside of the vehicle, because the second object range OBJ_R2 is drawn on the second image similar to scenery on the outside of the vehicle, the driver of the vehicle can appropriately perceive the position of the object as the warning target. Further, the driver is enabled to appropriately perceive the position of the object as the warning target, time period for and frequency of visual observations of a displayed image are thereby decreased, and more attention of the driver can be paid to visual observation in the advancing direction.

### Second Embodiment

In a second embodiment, a description will be made about a warning apparatus 2 in another form than the warning apparatus 1 according to the first embodiment. Note that in the description about the second embodiment, the same reference characters as those in the first embodiment will be given to the same configuration elements as configuration use purposes described in the first embodiment, and descriptions thereof will not be made.

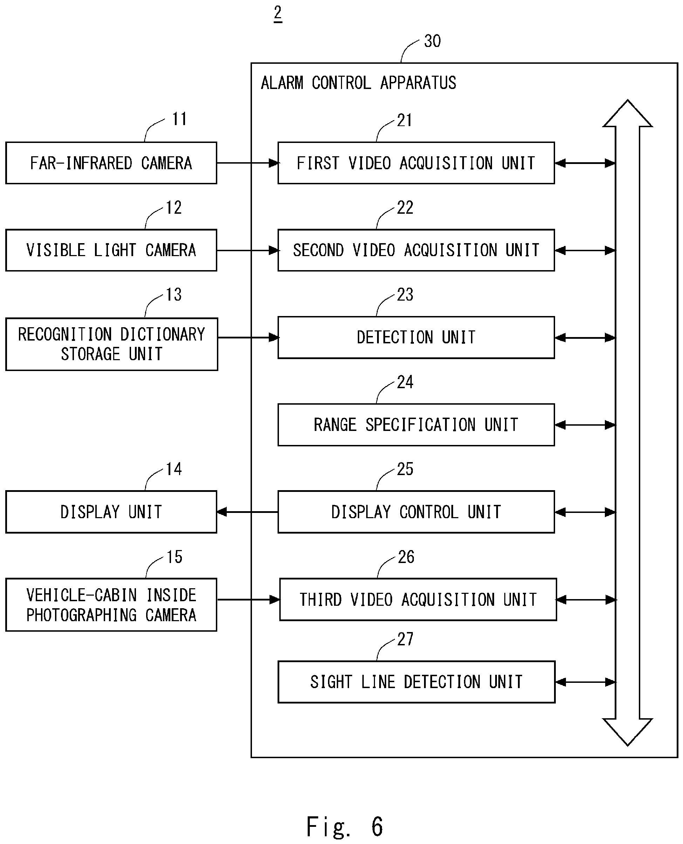

Fig. 6 illustrates a block diagram of the warning apparatus 2 according to the second embodiment. As illustrated in Fig. 6, the warning apparatus 2 according to the second embodiment is the warning apparatus 1 according to the first embodiment to which a vehicle-cabin inside photographing camera 15 is added and in which the alarm control apparatus 10 is replaced by an alarm control apparatus 30. The alarm control apparatus 30 is the alarm control apparatus 10 to which a third image acquisition unit 26 and a sight line detection unit 27 are added.

The vehicle-cabin inside photographing camera 15 photographs a driver in a vehicle cabin. In particular, the vehicle-cabin inside photographing camera 15 is installed so as to photograph the driver such that a sight line directed to the display unit 14 by the driver can be known. The third image acquisition unit 26 acquires an image photographed by the vehicle-cabin inside photographing camera 15 and transmits that to the sight line detection unit 27. The sight line detection unit 27 detects a sight line direction of the driver of the vehicle. In a case where the detection unit 23 detects the object as the warning target, the display control unit 25 causes the display unit to display the first image in which the first object range is drawn. In a case where the driver of the vehicle looks at the display unit 14 for a predetermined time period or longer or a case where the driver again looks at the display unit 14, the display control unit 25 causes the display unit to display the second image in which the second object range is drawn. The predetermined time period is three seconds or the like, for example. Further, the case where the driver again looks at the display unit 14 is, for example, a case where the driver of the vehicle looks at the display unit 14 displaying the first image in which the first object range is drawn, then looks at an area ahead of the vehicle, and thereafter again looks at the display unit 14 displaying the first image in which the first object range is drawn within three seconds, for example.

The case where the driver of the vehicle looks at the display unit 14 displaying the first image in which the first object range is drawn for the predetermined time period or longer is a case where although the first object range indicating the object as the warning target is displayed in the first image displayed on the display unit 14, the object as the warning target cannot be confirmed by visual observation to the outside of the vehicle. Further, the same applies to a case where the driver of the vehicle again looks at the display unit 14 displaying the first image in which the first object range is drawn.

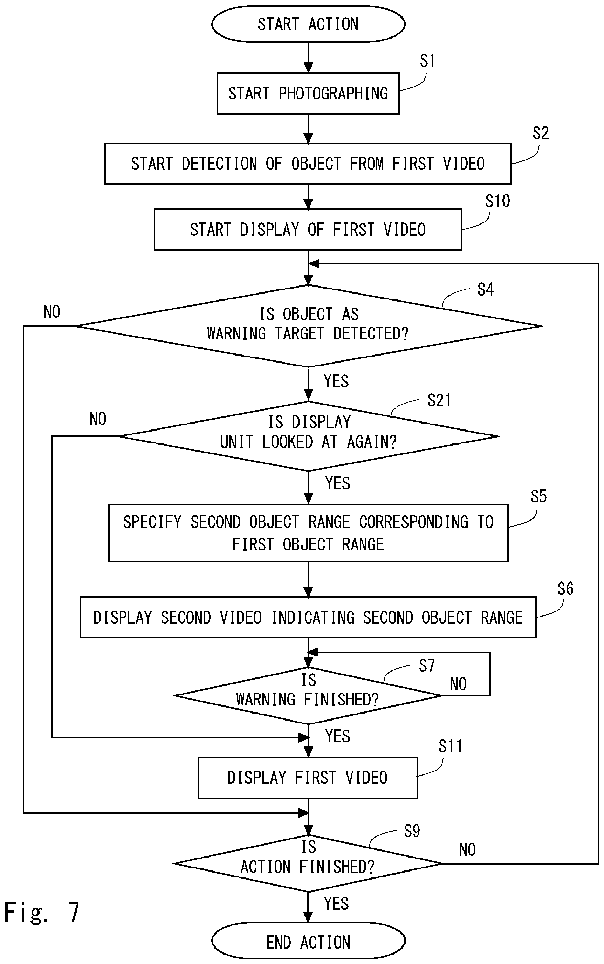

Here, Fig. 7 illustrates a diagram for explaining an action of the warning apparatus 2 according to the second embodiment. Fig. 7 explains the action of the warning apparatus 2 in a case where the second image in which the second object range is drawn is displayed only when the driver again looks at the display unit 14.

As illustrated in Fig. 7, the action of the warning apparatus 2 according to the second embodiment is the action, illustrated in Fig. 5, of the warning apparatus 1 according to the first embodiment to which an action in step S21 is added. Step S21 is performed after the detection unit 23 detects the object OBJ in step S4. In the warning apparatus 2, the first image photographed by the far-infrared camera 11 is projected on the display unit 14 in a state where the object OBJ is undetected. As long as the driver can recognize the object OBJ even when the second object range OBJ_R2 is not displayed, display of the first image is continued (step S21) without showing the second image which includes the second object range OBJ_R2 (without performing processes in steps S5 to S7).

As described above, in a case where it is determined that a state is established where the driver has to confirm the object OBJ by the second image, the warning apparatus 2 according to the second embodiment can display the second image in which the second object range is drawn.

Note that the present invention is not limited to the above embodiments but can appropriately be modified without departing from the scope of the gist thereof.

The present application claims priority based on Japanese Patent Application No. 2021-45681, filed on March 19, 2021, the entirety of which is incorporated herein by reference.

### Reference Signs List

- 1, 2: WARNING APPARATUS
- 10, 30: ALARM CONTROL APPARATUS
- 11: FAR-INFRARED CAMERA
- 12: VISIBLE LIGHT CAMERA
- 13: RECOGNITION DICTIONARY STORAGE UNIT
- 14: DISPLAY UNIT
- 15: VEHICLE-CABIN INSIDE PHOTOGRAPHING CAMERA
- 21: FIRST IMAGE ACQUISITION UNIT
- 22: SECOND IMAGE ACQUISITION UNIT
- 23: DETECTION UNIT
- 24: RANGE SPECIFICATION UNIT
- 25: DISPLAY CONTROL UNIT
- 26: THIRD IMAGE ACQUISITION UNIT
- 27: SIGHT LINE DETECTION UNIT
- OP: VISIBLE LIGHT CAMERA PHOTOGRAPHING RANGE
- IR: FAR-INFRARED CAMERA PHOTOGRAPHING RANGE
- OBJ: OBJECT
- OBJ_R1: FIRST OBJECT RANGE
- OBJ_R2: SECOND OBJECT RANGE

## Claims

1. A warning apparatus comprising:
a first image acquisition unit configured to acquire a first image photographed by a far-infrared camera which performs photographing in an advancing direction of a vehicle;
a second image acquisition unit configured to acquire a second image photographed by a visible light camera which performs photographing in a direction agreeing with a direction of the far-infrared camera;
a detection unit configured to detect an object as a warning target for a driver of the vehicle from the first image acquired by the first image acquisition unit;
a range specification unit configured to specify a first object range which is a range indicating the object detected in the first image and to specify a second object range in the second image, the second object range corresponding to the first object range, in a case where the detection unit detects the object as the warning target; and
a display control unit configured to cause a display unit, by which the driver of the vehicle is capable of visual observation of the second image, to display the second image in which the second object range is drawn.

2. The warning apparatus according to claim 1, wherein the display control unit causes the display unit to display the second image, in which the second object range is drawn, in a period in which a warning based on the detected object is performed.

3. The warning apparatus according to claim 1, further comprising a sight line detection unit configured to detect a sight line direction of the driver of the vehicle,
wherein the display control unit causes the display unit to display the first image, in which the first object range is drawn, in a case where the detection unit detects the object as the warning target and causes the display unit to display the second image, in which the second object range is drawn, in a case where the driver of the vehicle looks at the display unit for a predetermined time period or longer or a case where the driver again looks at the display unit.

4. The warning apparatus according to any one of claims 1 to 3, wherein the display control unit causes the display unit to display the second image while drawing the second object range on the second image in which chroma or contrast is lowered.

5. A warning method of causing a warning apparatus to execute:
a first image acquisition step of acquiring a first image photographed by a far-infrared camera which performs photographing in an advancing direction of a vehicle;
a second image acquisition step of acquiring a second image photographed by a visible light camera which performs photographing in a direction agreeing with a direction of the far-infrared camera;
a detection step of detecting an object as a warning target for a driver of the vehicle from the acquired first image;
a range specification step of specifying a first object range which is a range indicating the object detected in the first image and of specifying a second object range in the second image, the second object range corresponding to the first object range, in a case where the object as the warning target is detected; and
a display step of causing a display unit, by which the driver of the vehicle is capable of visual observation of the second image, to display the second image in which the second object range is drawn.
